# EUROPEAN PATENT APPLICATION

(11) **EP 4 316 748 A1**
(43) Date of publication of application: **07.02.2024**
(21) Application number: 22774767.2
(22) Date of filing: 15.02.2022
(51) Int. Cl.: B25J 13/08

(54) **MEASUREMENT SYSTEM, MEASUREMENT METHOD, AND PROGRAM**

(30) Priority: 22.03.2021 JP 2021046744
(71) Applicant: Linkwiz Incorporated, Hamamatsu-shi, Shizuoka 435-0042 (JP)
(72) Inventor: OSTROUMOV Georgy, Hamamatsu-shi, Shizuoka 435-0042 (JP); KATO Akihide, Hamamatsu-shi, Shizuoka 435-0042 (JP)
(74) Representative: Pfenning, Meinig & Partner mbB
(86) International application number: PCT/JP2022/005813
(87) International publication number: WO 2022/201967

(57) **Abstract**

In measurements using a sensor installed in the tip of a robot arm, it is necessary to synchronize a measurement operation of the sensor with the operation of the robot in order to improve the accuracy of the measurement. However, in the cases where the combination of a sensor and a robot is arbitrarily selected, it is not easy to build a measurement system for synchronizing the operation of the sensor with that of the robot. A measurement system configured to perform a measurement using a sensor installed in a robot, includes a synchronous processing unit configured to acquire a robot drive signal transmitted from a robot control unit configured to control the robot to the robot, and generate a trigger signal for triggering the sensor to start a measurement operation when the robot drive signal includes a command signal for the robot to start driving.

## Description

### Technical Field

The present invention relates to a measurement system, a measurement method, and a program.

### Background Art

Measurements using a sensor installed in a robot have been commonly practiced (see, for example, Patent Literature 1).

### Citation List

### Patent Literature

Patent Literature 1: Japanese Unexamined Patent Application Publication No. 2016-203273

### Summary

### Technical Problem

By changing the combination of the type of a sensor and the type of a robot in which the sensor is provided, the above-described measurements using a robot can be used for various types of measurements. Meanwhile, in order to improve the accuracy of the measurement, it is necessary to synchronize the measuring operation performed by the sensor with the operation performed by the robot. However, in the cases where the combination of a sensor and a robot is arbitrarily selected, it is not easy to build a measurement system for synchronizing the operation of the sensor with that of the robot.

Although Patent Literature 1 discloses that a synchronization signal is incorporated into a motor drive signal output to a motor of the robot, there is a problem that a program for generating the motor drive signal on the robot side needs to be changed.

The present invention has been made in view of the above-described background, and an object thereof is to provide a measurement system that can be easily built and is capable of synchronizing the operation of a sensor and that of a robot.

### Solution to Problem

An invention according to a main aspect of the present invention, which has been made to solve the above-described problem, is a measurement system configured to perform a measurement using a sensor installed in a robot, and including a synchronous processing unit configured to acquire a robot drive signal transmitted from a robot control unit configured to control the robot to the robot, and generate a trigger signal for triggering the sensor to start a measurement operation when the robot drive signal includes a command for the robot to start driving.

Other problems to be solved and their solutions disclosed in the present application will be clarified by descriptions of embodiments according to the invention and drawings thereof.

### Advantageous Effects of Invention

According to the present invention, it is possible to provide a measurement system that can be easily built and is capable of synchronizing the operation of a sensor and that of a robot.

### Brief Description of Drawings

Fig. 1 shows an example of a measurement system 100 according to an embodiment;
Fig. 2 shows the functions of components of the measurement system 100 according to the embodiment;
Fig. 3 is a flowchart of control performed by a measurement system according to an embodiment;
Fig. 4 shows an example of a case where the external shape of an object to be measured is measured by a measurement system according to an embodiment;
Fig. 5 is a graph showing measurement data and information about sensor positions on an XY-plane when an object to be measured with a circular hole formed therein is measured by the method shown in Fig. 4 in an embodiment;
Fig. 6 shows an example of a method for generating a sensor drive signal by a synchronous processing unit in an embodiment;
Fig. 7 shows an example of another method for generating a sensor drive signal by a synchronous processing unit in an embodiment;
Fig. 8 shows the functions of components when a sensor is synchronized based on operation data of a robot in an embodiment; and
Fig. 9 shows an example of a flowchart of different control performed by a measurement system in an embodiment.

### Description of Embodiments

Details of embodiments according to the present invention will be described one by one. The present invention includes, for example, the following features.

### [Item 1]

A measurement system configured to perform a measurement using a sensor installed in a robot, and including a synchronous processing unit configured to acquire a robot drive signal transmitted from a robot control unit configured to control the robot to the robot, and generate a trigger signal for triggering the sensor to start a measurement operation when the robot drive signal includes a command signal for the robot to start driving.

### [Item 2]

The measurement system described in Item 1, in which the command signal for the robot to start driving includes a command pulse signal or an encoder pulse signal for driving a motor installed in the robot.

### [Item 3]

A measurement system configured to perform a measurement using a sensor installed in a robot, and including a synchronous processing unit configured to acquire operation data on an actual operation of the robot, and generate a trigger signal for triggering the sensor to start a measurement operation when the operation data satisfies a predetermined condition.

### [Item 4]

The measurement system described in Item 3, in which a case where the operation data satisfies the predetermined condition includes at least one of a case where the operation data includes information indicating that the robot has started to operate, a case where the operation data includes information indicating that a part of the robot where the sensor is disposed has reached a predefined position, and a case where the operation data includes information indicating that a moving speed of the sensor has become equal to a predefined value.

### [Item 5]

The measurement system described in any one of Items 1 to 4, further including a measurement result generation unit configured to generate measurement result information by acquiring measurement data that the sensor has acquired based on the trigger signal and operation data of the robot that has operated based on the robot drive signal.

### [Item 6]

The measurement system described in Item 5, in which
each of the measurement data and the operation data includes clock information, and
the measurement result generation unit generates, based on the clock information included in the measurement data and clock information included in the operation data, the measurement result information in which the measurement data and the operation data are associated with each other.

### [Item 7]

The measurement system described in Item 5 or 6, in which the measurement result information includes information about a position and a shape of an object to be measured by the sensor.

### [Item 8]

The measurement system described in any one of Items 1 to 7, in which the synchronous processing unit includes a sensor control unit configured to generate the sensor drive signal as the trigger signal, acquire the drive signal for the sensor, and output the acquired drive signal to the sensor.

### [Item 9]

The measurement system described in any one of Items 1 to 8, further including a drive signal generation unit configured to generate the robot drive signal based on an operation command for the robot, and transmit the generated robot drive signal to the robot.

### [Item 10]

The measurement system described in Item 1 or 2, wherein the synchronous processing unit:
generates a sensor drive signal as the trigger signal, the sensor drive signal being a periodic pulse signal; and
changes a period of the pulse signal of the sensor drive signal when it has acquired the robot drive signal indicating that at least one of a position and a speed of the sensor satisfies a predetermined condition.

### [Item 11]

The measurement system described in Item 3 or 4, in which the synchronous processing unit:
generates a sensor drive signal as the trigger signal, the sensor drive signal being a periodic pulse signal; and
changes a period of the pulse signal of the sensor drive signal when it has acquired the operation data indicating that at least one of a position and a speed of the sensor satisfies a predetermined condition.

### [Item 12]

A measurement method for performing a measurement using a sensor installed in a robot, including:
a step of acquiring a robot drive signal transmitted from a robot control unit configured to control the robot to the robot; and
a step of generating a trigger signal for triggering the sensor to start a measurement operation when the robot drive signal includes a command signal for the robot to start driving.

### [Item 13]

A measurement method for performing a measurement using a sensor installed in a robot, including:
a step of acquiring operation data on an actual operation of the robot; and
a step of generating a trigger signal for triggering the sensor to start a measurement operation when the operation data satisfies a predetermined condition.

### [Item 14]

A program for causing a computer to perform a measurement method, the program being configured to cause the computer, as the measurement method, to perform:
a step of acquiring a robot drive signal to be transmitted to the robot; and
a step of generating a trigger signal for triggering the sensor to start a measurement operation when the robot drive signal includes a command signal for the robot to start driving.

### [Item 15]

A program for causing a computer to perform a measurement method, the program being configured to cause the computer, as the measurement method, to perform:
a step of acquiring operation data on an actual operation of a robot; and
a step of generating a trigger signal for triggering the sensor to start a measurement operation when the operation data satisfies a predetermined condition.

### <Details of Embodiments

Specific examples of a measurement system 100 according to an embodiment of the present invention will be described hereinafter with reference to the drawings. Note that the present invention is not limited to these examples but is represented by the scope of the claims. Further, all modifications within the meaning and scope equivalent to those of the scope of the claims are included in the invention. The same or similar elements are assigned the same or similar reference numerals and the same or similar names in the following description and the accompanying drawings. Further, redundant descriptions of the same or similar elements may be omitted as appropriate in the descriptions of embodiments. Further, features shown in one embodiment can be applied to other embodiments as long as they do not contradict those in the other embodiments.

### <Overall Configuration of Measurement System>

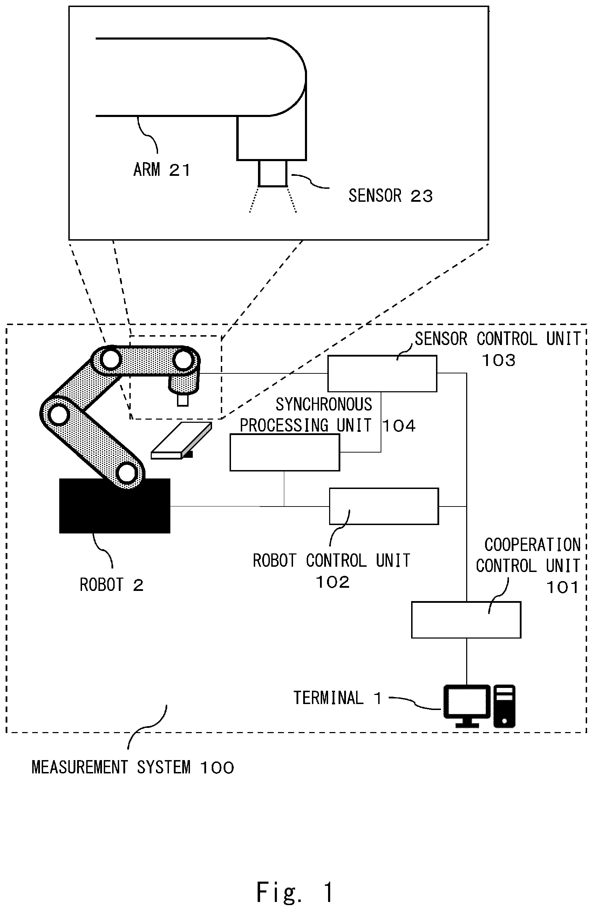

Fig. 1 shows an example of a measurement system 100 according to this embodiment. As shown in Fig. 1, the measurement system 100 includes a terminal 1, a cooperation control unit 101, a robot control unit 102, a sensor control unit 103, a synchronous processing unit 104, and a robot 2. The robot 2 includes, for example, an articulated robot arm in which a plurality of links are formed by a plurality of motors, and a sensor 23 is provided in an arm 21. Any type of measuring device can be used as the sensor 23. However, a distance measuring sensor that measures a distance to an object will be described in this embodiment as an example of such a measuring device.

The terminal 1 and the cooperation control unit 101 are connected to each other through a wire or wirelessly so that they can communicate with each other, and a measurement start command input by a user is transmitted to the cooperation control unit 101, for example, through an input unit of the terminal 1. Further, information about the result of the measurement generated by the cooperation control unit 101 is transmitted to the terminal 1 and displayed on a display unit thereof. Note that although the terminal 1 and the cooperation control unit 101 are shown as separate apparatuses in Fig. 1, they can be implemented in the same apparatus. The cooperation control unit 101 is also connected to each of the robot control unit 102 and the sensor control unit 103 so that they can communicate with each other. Information about the start of driving of the robot is transmitted from the cooperation control unit 101 to the robot control unit 102, and information about the actual operation performed by the robot is transmitted from the robot control unit 102 to the cooperation control unit 101. Further, information about measurement data detected by the sensor 23 is transmitted from the sensor control unit 103 to the cooperation control unit 101. The robot control unit 102 is also connected to the robot 2 and the synchronous control unit 104 so that they can communicate with each other, and a robot drive signal for driving the robot is transmitted from the robot control unit 102 to the robot 2 and the synchronous processing unit 104. The synchronous processing unit 104 is also connected to the sensor control unit 103 so that they can communicate with each other, and information about an operation command for the sensor generated by the synchronous processing unit 104 is transmitted to the sensor control unit 103. The operation command, which the sensor control unit 103 received from the synchronous processing unit 104, is transmitted to the sensor 23. Note that Fig. 1 merely shows an example, and the configuration of the measurement system 100 is not limited to the configuration shown in Fig. 1.

The terminal 1, the cooperation control unit 101, the robot control unit 102, the sensor control unit 103, and the synchronous processing unit 104 shown in Fig. 1 may be formed by, for example, a general-purpose computer having hardware such as a processor, a memory, a transmitting/receiving unit, and the like, or may be logically implemented by a cloud computing system.

### <Function of Measurement System>

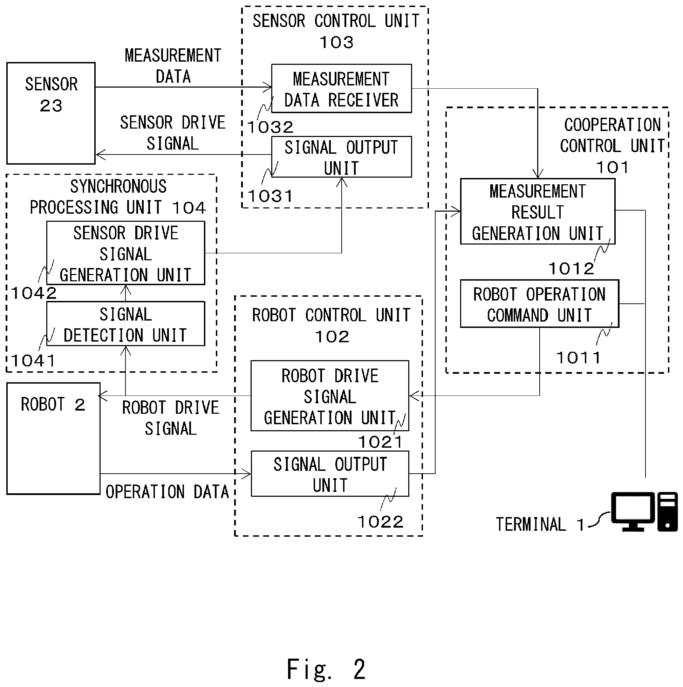

Fig. 2 shows the functions of components of the measurement system 100 according to this embodiment. The cooperation control unit 101 includes a robot operation command unit 1011 and a measurement result generation unit 1012. When the robot operation command unit 1011 receives a measurement start command from the terminal 1, it generates a robot operation command for triggering the robot to start to operate, and transmits the robot drive command to the robot control unit 102. The measurement result generation unit 1012 acquires, based on the measurement data received from the sensor control unit 103, information about a relative distance between the sensor and the object to be measured. Further, the measurement result generation unit 1012 acquires, based on the information about the actual operation of the robot received from the robot control unit 102, information about the coordinates of the position of the sensor installed in the arm of the robot. Further, the measurement result generation unit 1012 generates, based on information about a measurement start time included in the measurement data and information about an operation start time included in the information about the actual operation, measurement result information in which the coordinates of the position of each sensor are associated with information about the relative distance between the sensor and the object to be measured, and transmits the generated measurement result information to the terminal 1.

The robot control unit 102 includes a drive signal generation unit 1021 and a signal output unit 1022. When the robot drive signal generation unit 1021 receives a robot operation command transmitted from the robot operation command unit 1011, it transmits a robot drive signal to the robot 2 and the synchronous processing unit 104. Note that the robot drive signal may be a pulse signal that becomes a High signal when the motor provided in the robot 2 starts to operate, or it may be a periodic pulse signal in which High and Low levels repeatedly occur during the driving period of the motor. The robot 2 operates the arm 21 with the sensor 23 installed therein by driving the motor according to the received robot drive signal.

The synchronous processing unit 104 includes a signal detection unit 1041 and a sensor drive signal generation unit 1042. The signal detection unit 1041 detects whether a signal indicating the start of driving is included in the received robot drive signal, and when the signal indicating the start of driving is included in the robot drive signal, transmits a sensor operation start signal. Upon receiving the sensor operation start signal, the sensor drive signal generation unit 1042 generates a sensor drive signal and transmits the generated sensor drive signal to the sensor control unit 103. Note that the sensor drive signal may be, for example, a periodic pulse signal in which High and Low signals are repeatedly generated during the sensing-operation period of the sensor 23. In this case, the sensor 23 may be configured so as to perform sensing at the timing at which it has received a High signal. That is, the sensor 23 may be configured so that the sensing period can be changed according to the pulse signal period of the sensor drive signal.

The sensor control unit 103 includes a signal output unit 1031 and a measurement data receiving unit 1032. The sensor control unit 103 transmits the received sensor drive signal to the sensor 23. The measurement data receiving unit 1032 receives measurement data measured by the sensor 23 and transmits the received measurement data to the measurement result generation unit 1012 of the cooperation control unit 101.

### <Flowchart of Control of Measurement System>

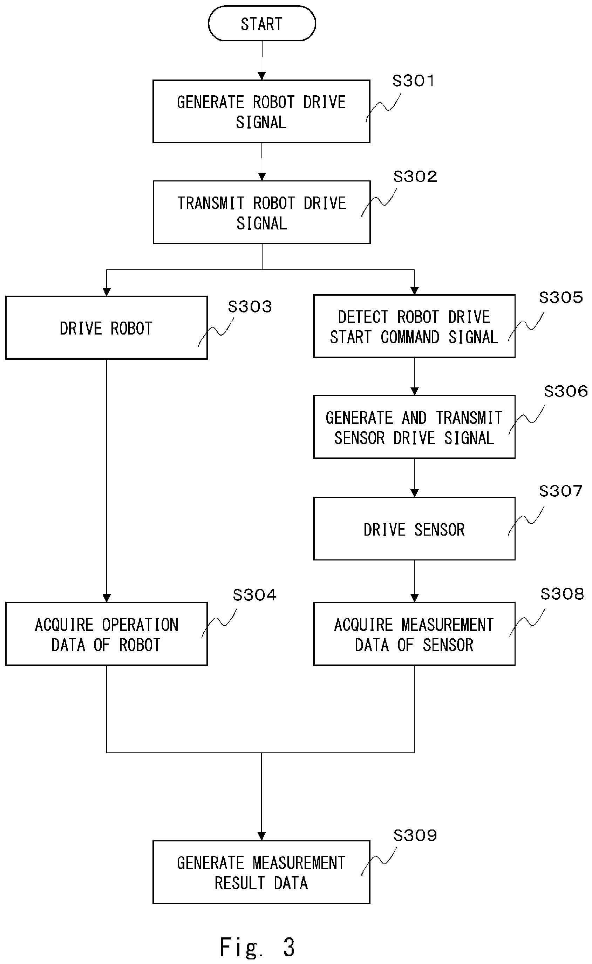

Fig. 3 shows a flowchart of control of the measurement system according to this embodiment. Fig. 3 shows a case where a timing at which the robot operation command unit 1011, which has received a measurement start command from the terminal 1, transmits a robot operation command is defined as the start of the flowchart. When the robot drive signal generation unit 1021 receives a robot operation command, it generates a robot drive command (Step 301). Next, the robot drive signal generation unit 1021 transmits the robot drive signal to the robot 2 and the synchronous processing unit 104 (Step 302). The robot 2 drives a plurality of motors installed in the robot according to the received robot drive signal (Step 303). The signal output unit 1022 of the robot control unit 102 acquires operation data including information about an actual operation from the robot 2 (Step 304).

The signal detection unit 1041 of the synchronous processing unit 104 detects whether or not the robot drive signal received from the robot drive signal generation unit 1021 in the step 302 includes a command signal indicating that the driving of the robot has started (Step 305). When the signal detection unit 1041 determines that the aforementioned command signal is included in the robot drive signal, the sensor drive signal generation unit 1042 generates a sensor drive signal and transmits the generated sensor drive signal to the signal output unit of the sensor control unit 103 (Step 306). The sensor 23 drives the sensor according to the sensor drive signal received through the signal output unit 1031 and thereby performs sensing (Step 307). The measurement data receiving unit 1032 of the sensor control unit 103 acquires measurement data from the sensor 23 (Step 308).

The measurement result generation unit 1012 acquires the operation data from the signal output unit 1022 of the robot control unit 102, acquires the measurement data from the measurement data receiving unit 1032, and generates measurement result data. Note that the measurement result generation unit 1012 generates the measurement result data for the object to be measured by associating information about the measurement start time included in the measurement data with information about the operation start time included in the operation data. By associating the measurement data with the operation data based on the measurement start time as described above, it is possible to acquire a plurality of detection values constituting the measurement data while associating each of the detection value with information about the coordinates of the position, the speed, or the posture of the sensor when that detection value is acquired.

### <Measurement Method>

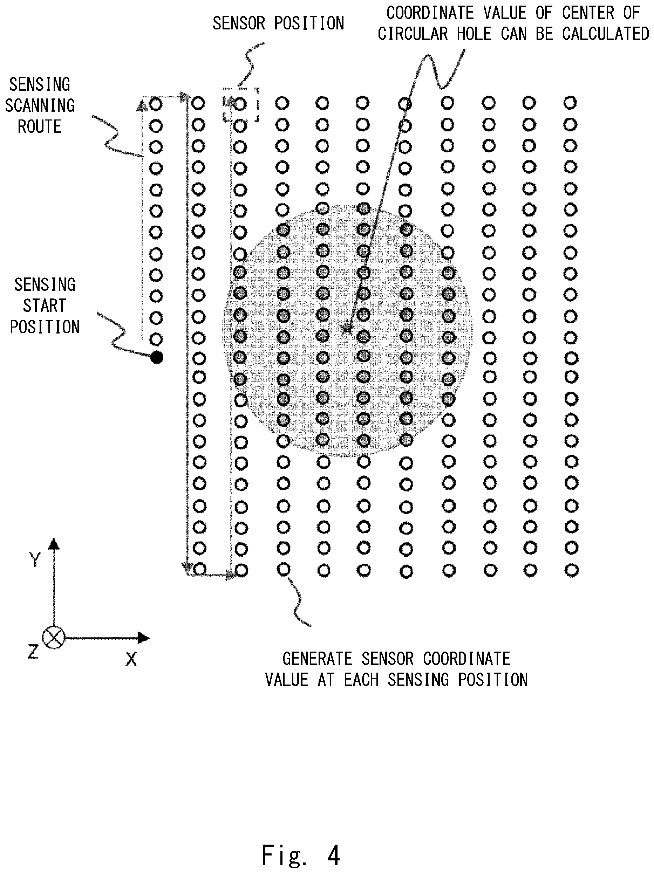

Fig. 4 shows an example of a case where the external shape of an object to be measured is measured by the measurement system according to this embodiment. Fig. 4 shows an example in which the 3D (three-dimensional) shape of an object to be measured is measured by moving a distance measuring sensor installed in the robot arm along a predefined sensing scanning route (indicated by arrows in the drawing) on the XY-plane by driving the robot arm while sensing the distance to the object to be measured in the vertically downward direction (in the Z-axis direction) in a predetermined period by the distance measuring sensor. Dots in Fig. 4 indicate sensing positions at which sensing is periodically performed.

When a measurement is started, the distance measuring sensor is positioned at a scanning start position (indicated by a black dot) on the XY-plane in Fig. 4. Then, when a robot drive signal is output from the robot drive signal generation unit, a sensor drive signal is input to the sensor through the synchronous processing unit 104, so that the scanning by the sensor starts. In the example shown in Fig. 4, since an object to be measured with a circular hole formed at the center thereof is measured, measurement data that is obtained when sensing is performed in the position of the circular hole (i.e., the distance between the sensor and the object to be measured in the Z-axis direction) is larger than measurement data that is obtained in positions other than the circular hole. Measurement data at all sensing positions can be obtained by performing the sensing operation up to the end of the sensing scanning route. Therefore, it is possible to specify the areas where the circular hole is formed and the area where it is not formed as shown in Fig. 4, and it is also possible to obtain the coordinate values of the center of the circular hole by performing calculation based on the obtained information.

### <Measurement Data and Operation Data>

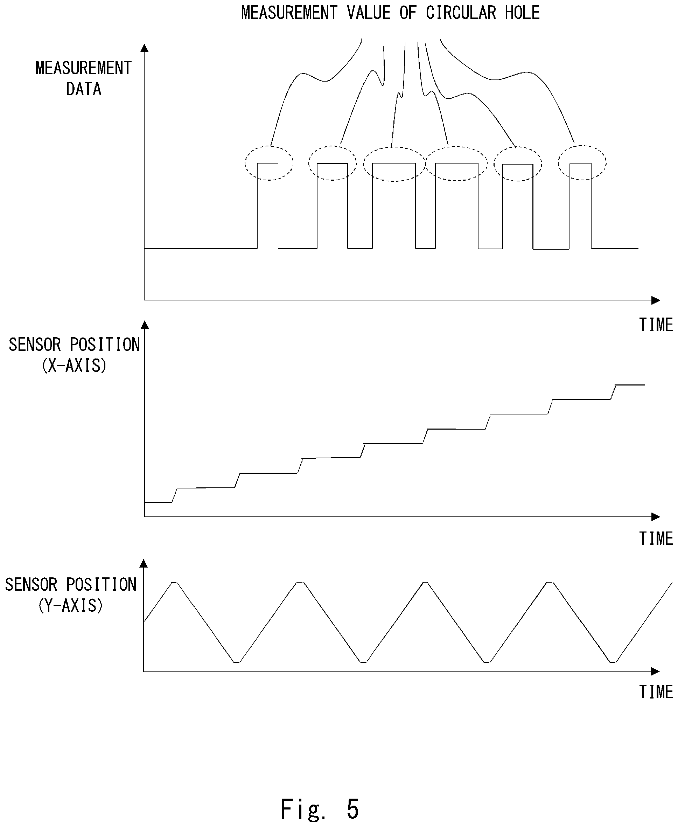

Fig. 5 is a graph showing measurement data and information about sensor positions (operation data) on the XY-plane when the object to be measured with the circular hole formed therein is measured by the method shown in Fig. 4 in this embodiment. The graph in the upper part of Fig. 5 is a graph showing measurement data at each time point, and the graph in the middle part is a graph showing a sensor position in the X-axis direction at each time point. Further, the graph in the lower part is a graph showing a sensor position in the Y-axis direction at each time point. In the graph of measurement data, measurement data is relatively large at time points at each of which a measurement is made in the position of the circular hole is measured. Further, when the sensor moves along the sensing scanning route as shown in Fig. 4, the position of the sensor in the X-axis direction increases in a stepwise manner as shown in the graph in the middle part of Fig. 5. Further, the position of the sensor in the Y-axis direction repeatedly increases and decreases in a sawtooth pattern as shown in the graph in the lower part of Fig. 5.

### <Method for Generating Sensor Drive Signal>

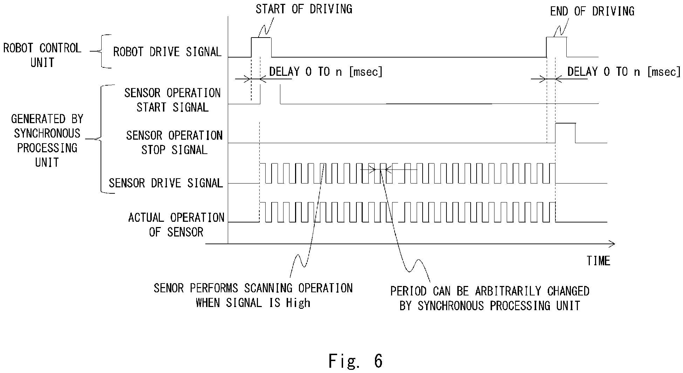

Fig. 6 shows an example of a sensor drive signal generated by the synchronous processing unit in this embodiment. From the top, a robot drive signal, a sensor operation start signal, a sensor operation stop signal, a sensor drive signal, and an actual operation of the sensor are shown in Fig. 6. The robot drive signal is a signal generated by the robot drive signal generation unit 1021 of the robot control unit 102 and has a pulse signal indicating the start of driving and a pulse signal indicating the end of the driving.

The sensor operation start signal, the sensor operation stop signal, and the sensor drive signal are signals generated by the sensor drive signal generation unit 1042 in the synchronous processing unit 104. The sensor operation start signal is a signal including a pulse signal indicating the start of the operation of the sensor. When the pulse signal indicating the start of driving is detected in the robot drive signal acquired by the signal detection unit in the synchronous processing unit, a pulse signal indicating the start of the operation of the sensor is immediately generated as the sensor operation start signal. Similarly, the sensor operation stop signal is a signal including a pulse signal indicating the stop of the operation of the sensor. When the pulse signal indicating the stop of driving is detected in the robot drive signal acquired by the signal detection unit in the synchronous processing unit, a pulse signal indicating the stop of the operation of the sensor is immediately generated as the sensor operation start signal. A small delay time could occur between the occurrence of a drive start pulse signal or a drive end pulse signal in the robot drive signal and the generation of a pulse signal in the sensor operation start signal or the sensor operation stop signal.

The sensor drive signal generation unit simultaneously generates a pulse signal indicating the start of the operation in the sensor operation start signal and a sensor drive signal that periodically repeats High and Low levels. Therefore, the timing at which the pulse signal indicating the start of the operation in the sensor operation start signal rises and the timing at which the pulse signal in the sensor drive signal rises are substantially simultaneous with each other. Since the High-level signal in the sensor drive signal is an instruction to the sensor to perform a sensing operation and the Low-level signal therein is a signal that does not instruct the sensor to perform a sensing operation, the sensor repeats, as the actual operation, the execution of a sensing operation and the stop of the sensing operation at the high-level timing and the low-level timing, respectively, of the sensor drive signal.

Note the sensor drive signal generation unit can be configured so that a pulse rises at an arbitrary timing and a pulse signal having an arbitrary period can be generated as the sensor drive signal. That is, instead of preparing a reference pulse signal synchronized with an internal clock in advance and raising a pulse of the sensor drive signal at the timing at which the pulse of this reference pulse signal rises, a pulse signal that immediately rises upon receiving the pulse signal indicating the start of the driving in the robot drive signal is generated, so that it is possible to reduce the variations in the delay time from the rise of the drive start signal in the robot drive signal to the rise of the sensor drive signal. Further, in the case where hardware having a sufficiently high computational processing capability is used, it is possible to reduce the delay time caused by the processing time for the pulse generation to a negligible level, and in some cases, to reduce the delay time to substantially zero.

As described above, by being equipped with the synchronous processing unit that acquires a signal for driving the robot and generates a signal for triggering the sensor to start driving, it is possible to eliminate or reduce the need to change software or the like of the robot control unit which would otherwise be required to synchronize the sensor with the robot. Further, when the synchronous process is performed for an arbitrary combination of an arbitrary robot and an arbitrary sensor, it is also possible, by appropriately designing the synchronous processing unit that generates a command for starting the driving of the sensor, to eliminate the need to change the robot control unit and/or the software or the like thereof or to reduce the amount of changes to be made to them.

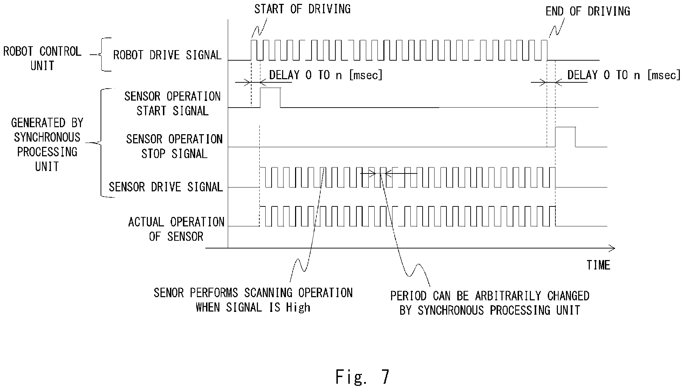

Fig. 7 shows an example of another method for generating a sensor drive signal by the synchronous processing unit in this embodiment, and in particular, shows an example in which the sensor drive signal is generated based on an encoder pulse signal. While Fig. 6 shows an example in which the synchronous processing unit acquires a signal having a pulse signal for instructing the robot to start driving and a pulse signal for instructing the robot to end driving, Fig. 7 shows an example in which the synchronous processing unit acquires a periodic pulse signal (e.g., an encoder pulse signal) in which High and Low levels repeatedly occur during the driving period of the motor. In this case, the signal detection unit 1041 of the synchronous processing unit can detect a rise of a pulse of the robot drive signal and generate a sensor operation start signal in the sensor drive signal generation unit. Further, similarly to the start of driving, when the driving is finished, the signal detection unit 1041 can detect that no pulse of the robot driving signal appears for a predetermined time or longer and generate a sensor operation stop signal in the sensor drive signal generation unit.

### <Modified Example>

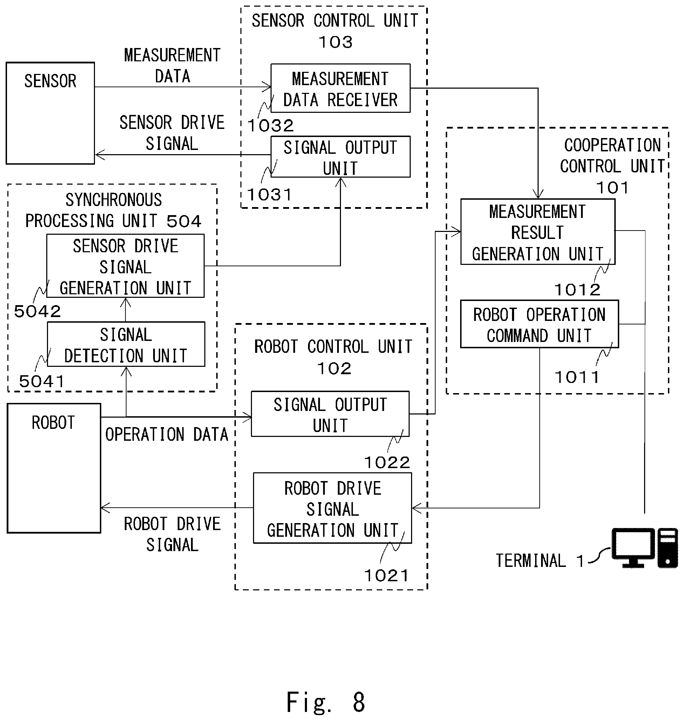

Fig. 8 shows the functions of components when the sensor is synchronized based on operation data of the robot in this embodiment. In Fig. 2, an example in which the synchronous processing unit acquires a robot drive signal transmitted from the robot control unit to the robot and generates a sensor drive signal based on this robot drive signal was described. In contrast, in Fig. 8, an example in which a sensor drive signal is generated based on operation data acquired from the robot will be described. Parts of the modified example shown in Fig. 8 that are different from those of the example shown in Fig. 2 will be described hereinafter.

Operation data output from the robot is information about the actual operation of the robot, and for example, can be information including information about the start of the operation of the robot. In this case, the signal detection unit 5041 in the synchronous processing unit 504 acquires operation data, and when the acquired operation data includes information indicating that the robot has started operating, the signal detection unit 5041 generates a sensor operation start signal and transmits the generated sensor operation start signal to the sensor drive signal generation unit.

As another example of the operation data, it can be information including position coordinate information of the sensor. In this case, the signal detection unit 5041 acquires operation data, and when the acquired operation data includes information indicating that the coordinates of the position of the sensor have reached a predefined coordinates of position, it generates a sensor operation start signal and transmits the generated sensor operation start signal to the sensor drive signal generation unit.

As yet another example of the operation data, it can be information including speed information of the sensor. The speed information of the sensor may be information about the current or voltage of the motor or a combination thereof. In this case, the signal detection unit 5041 acquires operation data, and when the acquired operation data includes information indicating that the speed of the sensor has reached a predefined value, it generates a sensor operation start signal and transmits the generated sensor operation start signal to the sensor drive signal generation unit.

When the signal detection unit 5041 receives the above-described operation data, generates a sensor operation start signal, and transmits the generated sensor operation start signal to the sensor drive signal generation unit, the sensor drive signal generation unit generates a sensor drive signal and transmits the generated sensor drive signal to the sensor control unit.

Further, when the sensor drive signal generation unit is configured so that it can change the period of the sensor drive signal to an arbitrary value, it may change the period of the sensor drive signal by having the signal detection unit detect whether or not the received operation data satisfy a predetermined condition. For example, by detecting that the position of the sensor has entered an area where it is desired to perform sensing with higher accuracy than that in other areas by the position coordinate information of the sensor, and making the period of the sensor drive signal shorter than that in other areas, it becomes possible to perform a measurement of an arbitrary area with higher accuracy within the area where measurements are to be made. Further, as another example, by detecting that the sensor is located in an area along the position sensing scanning route of the sensor where the sensor makes a turn by the position coordinate information of the sensor, and making the period of the sensor drive signal shorter than that in other areas, it becomes possible to perform a measurement with high accuracy for the period during which the robot arm performs a complex movement other than the straight-line movement. As yet another example, it becomes possible to reduce the variations in intervals between the sensing positions caused by changes in the speed by making, when the moving speed of the sensor has increased beyond a predetermined speed, the period of the sensor drive signal shorter.

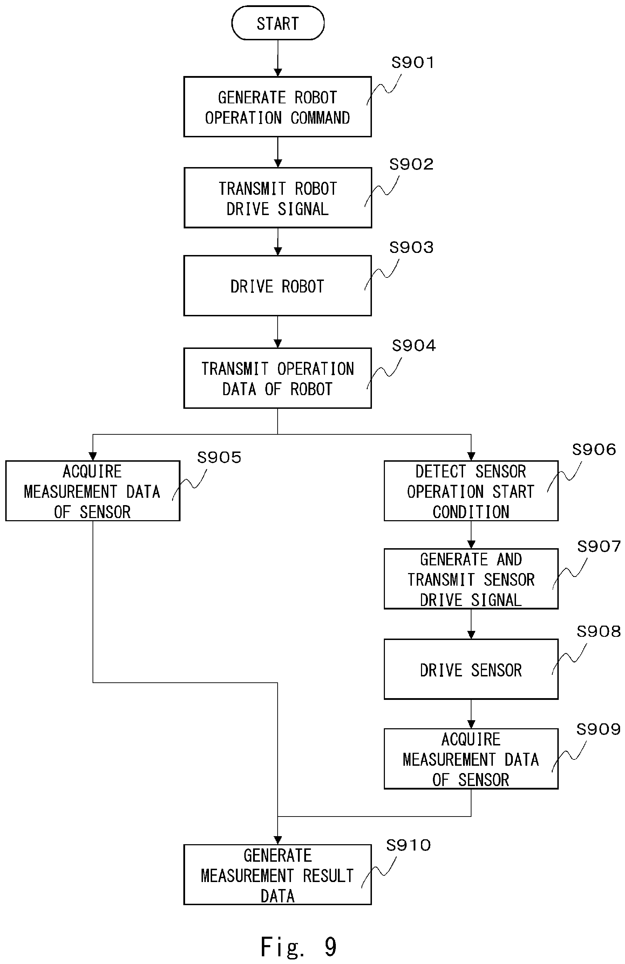

Fig. 9 shows an example of a flowchart of different control performed by the measurement system in this embodiment. Fig. 9 shows a case where a timing at which the robot operation command unit 1011, which has received a measurement start command from the terminal 1, transmits a robot operation command is defined as the start of the flowchart. When the robot drive signal generation unit 1021 receives a robot operation command, it generates a robot drive command (Step 901). Next, the robot drive signal generation unit 1021 transmits a robot drive signal to the robot 2 (Step 902). The robot 2 drives a plurality of motors installed in the robot according to the received robot drive signal (Step 903). The robot 2 transmits operation data including information about the actual operation of the robot 2 to the signal detection unit 5041 of the synchronous processing unit and the signal output unit 1022 of the robot control unit (Step 904), and the signal output unit 1022 of the robot control unit 102 acquires the operation data including the information about the actual operation from the robot 2 (Step 905).

The signal detection unit 5041 of the synchronous processing unit 504 detects whether or not the operation data transmitted from the robot 2 satisfies a predetermined condition in a step 904. For example, when the operation data includes information indicating that the robot has started to operate, information indicating that the coordinates of the position of the sensor have reached a predefined coordinates of position, or information indicating that the speed of the sensor has reached a predefined value, one of these information items is detected (Step 906). When it is determined that the operation data satisfies the predetermined condition by the signal detection unit 5041, the sensor drive signal generation unit 5042 generates a sensor drive signal and transmits the generated sensor drive signal to the signal output unit of the sensor control unit 103 (Step 907). The sensor 23 drives the sensor according to the sensor drive signal received through the signal output unit 1031 and thereby perform sensing (Step 908). The measurement data receiving unit 1032 of the sensor control unit 103 acquires measurement data from the sensor 23 (Step 909).

The measurement result generation unit 1012 acquires operation data from the signal output unit 1022 of the robot control unit 102, acquires measurement data from the measurement data receiving unit 1032, and generates measurement result data. Note that the measurement result generation unit 1012 generates the measurement result data for the object to be measured by associating information about the measurement start time included in the measurement data with information about the operation start time included in the operation data. By associating the measurement data with the operation data based on the measurement start time as described above, it is possible to acquire a plurality of detection values constituting the measurement data while associating each of the detection value with information about the coordinates of the position, the speed, or the posture of the sensor when that detection value is acquired.

Although embodiments according to the present invention have been described above, the above-described embodiments are intended to facilitate the understanding of the present invention and are not intended to interpret the present invention in a limited manner. The present invention can be modified and improved without departing from the scope and spirit thereof, and the present invention includes its equivalents.

### Reference Signs List

- 1: TERMINAL
- 2: ROBOT
- 21: ARM
- 23: SENSOR
- 100: MEASUREMENT SYSTEM
- 101: COOPERATION CONTROL UNIT
- 102: ROBOT CONTROL UNIT
- 103: SENSOR CONTROL UNIT
- 104: SYNCHRONOUS PROCESSING UNIT
- 1011: ROBOT OPERATION COMMAND UNIT
- 1012: MEASUREMENT RESULT GENERATION UNIT
- 1021: ROBOT DRIVE SIGNAL GENERATION UNIT
- 1022: SIGNAL OUTPUT UNIT
- 1031: SIGNAL OUTPUT UNIT
- 1032: MEASUREMENT DATA RECEIVER
- 1041: SIGNAL DETECTION UNIT
- 1042: SENSOR DRIVE SIGNAL GENERATION UNIT

## Claims

1. A measurement system configured to perform a measurement using a sensor installed in a robot, and comprising a synchronous processing unit configured to acquire a robot drive signal transmitted from a robot control unit configured to control the robot to the robot, and generate a trigger signal for triggering the sensor to start a measurement operation when the robot drive signal includes a command signal for the robot to start driving, wherein
the robot drive signal is input to both the robot and the synchronous processing unit.

2. The measurement system according to claim 1, wherein the command signal for the robot to start driving includes a command pulse signal or an encoder pulse signal for driving a motor installed in the robot.

3. A measurement system configured to perform a measurement using a sensor installed in a robot, comprising a synchronous processing unit configured to:
acquire operation data including position coordinate information of the sensor, speed information of the sensor, or information about a current, a voltage or a combination of them of a motor configured to drive the robot; and
generate a trigger signal for triggering the sensor to start a measurement operation when the operation data satisfies a predetermined condition, wherein
the operation data is input to both a robot control unit configured to control the robot and the synchronous processing unit.

4. The measurement system according to claim 3, wherein a case where the operation data satisfies the predetermined condition includes at least one of a case where the operation data includes information indicating that the robot has started to operate, a case where the operation data includes information indicating that a part of the robot where the sensor is disposed has reached a predefined position, and a case where the operation data includes information indicating that a moving speed of the sensor has become equal to a predefined value.

5. The measurement system according to claim 1 or 2, further comprising a measurement result generation unit configured to generate measurement result information by acquiring measurement data that the sensor has acquired based on the trigger signal and operation data of the robot that has operated based on the robot drive signal.

6. The measurement system according to claim 5,
each of the measurement data and the operation data includes time information, and
the measurement result generation unit generates, based on information about a time of a start of a measurement included in the measurement data and information about a time of a start of an operation included in the operation data, the measurement result information in which the measurement data and the operation data are associated with each other.

7. The measurement system according to claim 5 or 6, wherein the measurement result information includes information about a position and a shape of an object to be measured, measured by the sensor.

8. The measurement system according to any one of claims 1 to 7, wherein the synchronous processing unit includes a sensor control unit configured to generate a sensor drive signal for driving the sensor as the trigger signal, acquire the sensor drive signal, and output the acquired sensor drive signal to the sensor.

9. The measurement system according to any one of claims 1 to 8, further comprising a drive signal generation unit configured to generate the robot drive signal based on an operation command for the robot, and transmit the generated robot drive signal to the robot.

10. The measurement system according to claim 1 or 2, wherein the synchronous processing unit:
generates a sensor drive signal as the trigger signal, the sensor drive signal being a periodic pulse signal; and
changes a period of the pulse signal of the sensor drive signal when it has acquired the robot drive signal indicating that at least one of a position and a speed of the sensor satisfies a predetermined condition.

11. The measurement system according to claim 3 or 4, wherein the synchronous processing unit:
generates a sensor drive signal as the trigger signal, the sensor drive signal being a periodic pulse signal; and
changes a period of the pulse signal of the sensor drive signal when it has acquired the operation data indicating that at least one of a position and a speed of the sensor satisfies a predetermined condition.

12. A measurement method for performing a measurement using a sensor installed in a robot, comprising:
a step of, by a robot control unit configured to control the robot, generating a robot drive signal;
a step of transmitting the robot drive signal to both the robot and a synchronous processing unit;
a step of, by the synchronous processing unit, acquiring the robot drive signal; and
a step of, by the synchronous processing unit, generating a trigger signal for triggering the sensor to start a measurement operation when the robot drive signal includes a command signal for the robot to start driving.

13. A measurement method for performing a measurement using a sensor installed in a robot, comprising:
a step of acquiring operation data including position coordinate information of the sensor, speed information of the sensor, or information about a current, a voltage or a combination of them of a motor configured to drive the robot;
a step of transmitting the operation data to both a robot control unit configured to control the robot and a synchronous processing unit; and
a step of, by the synchronous processing unit, generating a trigger signal for triggering the sensor to start a measurement operation when the operation data satisfies a predetermined condition.

14. A program for causing a computer to perform a method for performing a measurement using a sensor installed in a robot, the program being configured to cause the computer, as the measurement method, to perform:
a step of, by a robot control unit configured to control the robot, generating a robot drive signal;
a step of transmitting the robot drive signal to both the robot and a synchronous processing unit;
a step of, by the synchronous processing unit, acquiring the robot drive signal; and
a step of, by the synchronous processing unit, generating a trigger signal for triggering the sensor to start a measurement operation when the robot drive signal includes a command signal for the robot to start driving.

15. A program for causing a computer to perform a method for performing a measurement using a sensor installed in a robot, the program being configured to cause the computer, as the measurement method, to perform:
a step of acquiring operation data including position coordinate information of the sensor, speed information of the sensor, or information about a current, a voltage or a combination of them of a motor configured to drive the robot;
a step of transmitting the operation data to both a robot control unit configured to control the robot and a synchronous processing unit; and
a step of, by the synchronous processing unit, generating a trigger signal for triggering the sensor to start a measurement operation when the operation data satisfies a predetermined condition.
